(19)

Europäisches
Patentamt
European
Patent Office
Office européen
des brevets

(11) **EP 2 637 014 A1**

(12) **EUROPEAN PATENT APPLICATION**

(43) Date of publication:
**11.09.2013  Bulletin 2013/37**

(51) Int Cl.:
***G01N 3/56*** *(2006.01)*

(21) Application number: **12158893.3**

(22) Date of filing: **09.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **F.A. Müggler Service A/S**
**3550 Slangerup (DK)**

(72) Inventors:
• **Müggler, Jens**
 **3550 Slangerup (DK)**
• **Kancleris, Zilvinas**
 **10224 Vilnius (LT)**
• **Galdikas, Algirdas**
 **10224 Vilnius (LT)**
• **Yadav, Mitesh**
 **Leicestershire, LE 13 0PB (GB)**
• **Khiroya, Harshil**
 **Leicestershire, LE 13 0PB (GB)**

• **Melninkaitis, Andrius**
 **10223 Vilnius (LT)**
• **Sirutkaitis, Valdas**
 **10223 Vilnius (LT)**
• **Paipulas, Domas**
 **10223 Vilnius (LT)**
• **Alesenkov, Aleksandr**
 **10223 Vilnius (LT)**
• **Balachninaite, Ona**
 **10223 Vilnius (LT)**
• **Dent, Andrew C.E.**
 **Bath BA2 7AY (GB)**
• **Reginonini, Domenico**
 **Bath BA2 7AY (GB)**
• **Adamaki, Vaia**
 **Bath BA2 7AY (GB)**

(74) Representative: **Heebøll-Nielsen, Anders et al**
 **Awapatent A/S**
 **Rigensgade 11**
 **1316 Copenhagen K (DK)**

(54) **Sensor system for monitoring wear**

(57)    Sensor system for monitoring wear on a surface comprising a substrate of a base material, the substrate having a surface with a recess;

a sensor comprising an electrically conductive ceramic material selected from a Magnéli phase ceramic material, a MAX phase ceramic material or a combination thereof, the sensor having a wear surface and a first electrical contact area in communication with a first electrical conductor and a second electrical contact area in communication with a second electrical conductor,

the sensor being embedded in an electrically insulating material so that the wear surface is exposed to allow contact with the wear surface and the first and the second electrical conductors being in communication with a signal interpretation circuit, and

the electrically insulating material being embedded in the recess to electrically insulate the sensor from the substrate.

The sensor system can be used for monitoring wear on a surface, e.g. the surface of injection moulds, dyes for extrusion, in the automotive industry. The sensor system can be used in the temperature range up to 500°C.

Fig. 1B

## Description

### Field of the invention

This invention relates to a sensor system for monitoring wear on a surface. Areas of relevance to the project comprise any field where a substrate surface, e.g. a steel surface, is subjected to continuous friction, such as large production injection moulds, dyes for extrusion, in the automotive industry, e.g. for driveshafts, gears, brake pads, in the wind mill industry etc. The sensor system is capable of doing non-invasive real time measurements during production, giving OEM sub-suppliers the possibility of ensuring high quality parts, reducing the amount of produced scrap and increasing machine utilisation in a cost effective and easy way. The invention further relates to a method of producing the sensor system and to uses of the sensor system. The sensor system may be used at high temperature, such as temperatures in the range of up to 500°C or more.

### Prior art

Sensors to monitor wear of a surface and thereby the structural health of a substrate are well known, and the invention is part of a collaborative project funded by the European Commission under the FP7 Cooperation Programme to provide improved sensor systems. The project thus aims to provide real time health monitoring to reduce scrap and machine down-time of production equipment and the like, which is subject to wear during use. The technological starting point of the project, as described conceptually on the website www.mesmesh.eu, is the idea that a conductive ceramic may be used as a waveguide sensor, and the project thus involves the development and embedment of a conductive ceramic for the waveguide application into a substrate. Important parameters for the project will be to find optimal process parameters for forming smooth walled and depth-controlled grooves in a substrate, to produce a conductive ceramic with appropriate characteristics that can be bonded and/or sintered into a recess. The project further involves development of software that can interpret the signal responses from the ceramic mesh to provide an end user with a tool to do real time monitoring of the structural health of a given substrate surface.

Several sensor systems are disclosed in the prior art, and WO2010/030308 describes a sensor device for monitoring wear of components of a machine such as an engine, e.g. within a gas turbine engine. The device of WO2010/030308 is particularly relevant for monitoring wear under conditions in which vibrations and dynamic forces cause wear. This device comprises a layer of a coating material deposited on the surface of a substrate. Next, an electrically insulating layer is deposited over the coating layer, before depositing conductors on the insulating layer. After this another insulating layer is deposited over the conductors. The coated substrate is then provided with a final wear resistant top layer. The deposited layers are generally microsized with thicknesses of about 5 $\mu$m to 100 $\mu$m.

The device of WO2010/030308 solves the problem of not requiring the process steps of trenching or planarisation. However, it appears that the substrate must be fully coated in order to be used in an engine. Further, the monitoring device does not allow measuring of a gradual change in the structural integrity of the component since it is covered with a wear resistant top layer; the wear resistant top layer additionally may prevent the component from being used to monitor structural health of substrates in physical contact with other solid objects, e.g. in a brake, or a liquid substance, e.g. a mould.

US 2003/017018 discloses a cutting tool having a sensor circuit for detecting the end of the service life of the cutting tool and to a production method therefor. Specifically, the cutting tool with the sensor comprises an electrically conductive substrate, an insulation film provided on a surface of the electrically conductive substrate, and a sensor circuit of an electrically conductive film provided on the insulation film.

Short circuits between the substrate and the electrically conductive sensor circuit are prevented in US 2003/017018 by using two or more insulation layers consecutively stacked with the intention to ensure proper function of the sensor circuit. Exemplary materials for the electrically conductive substrate include an aluminium oxide ceramic, a silicon nitride ceramic, a cermet, a cemented carbide, a cubic boron nitride ceramic and a polycrystalline diamond ceramic; exemplary insulation layers materials are aluminium oxide and/or zirconium oxide. Formation of the insulation layers may be achieved using a vapour deposition method, a sputtering method or an evaporation method, or a plating method. The electrically conductive film may be an iron group metal or metals or carbides, nitrides, carbonitrides of metals of Groups 4a, 5a and 6a in the periodic table. The electrically conductive film may be patterned into a predetermined configuration by a laser irradiation method and may have a line width of 0.01 mm to 0.1 $\mu$m, although no specific patterns are revealed.

It appears to be necessary according to US 2003/017018 to fully coat the substrate material in order to achieve the prevention of a short circuit between the substrate and the electrically conductive film. Full coating of a substrate may be problematic for large substrates, such as an injection mould or a nacelle for a wind mill.

US 2004/202886 describes a component of a gas turbine engine for monitoring the environment of a coating formed on a surface of the component and a method for producing it. The component may include: a substrate; a barrier coating deposited on a surface of the substrate; a trench formed in the barrier coating; a sensor formed in the trench; and a backfill material deposited in the trench over the sensor. A bond coat may be deposited between the substrate and the thermal barrier coating, with the trench extending through the barrier coating to a depth proximate an interface between the bond coat and the barrier coating, and the sensor formed proximate the interface between the bond coat and the barrier coating. The trench may be formed using e.g. laser engraving, and an insulating coating may be applied to the surfaces of the trench in order to provide electrical isolation between sensor and the thermal barrier coating material. Material may be deposited into the trench using processes such as chemical vapour deposition, plasma spray, micro-plasma spray, cold spray, electroplating, electrophoretic deposition, HVOF, sputtering, CCVD, sol-gel and selective laser melting. Processes used for the fabrication of multi-layer thick film capacitors may also be used, such as the application of pastes and tapes of the desired materials. After the deposition of material, a heat input may be used to sinter the material, for example by heating using a flame, plasma, furnace annealing or localised laser energy application.

US 2004/202886 also suggests a superficial location of a sensor to be useful for sensing a parameter related to the external environment, such as temperature or a chemical parameter. It is further indicated that a structure with sensors embedded at a plurality of depths within the confines of a wall of a component may be useful for monitoring the amount of wear of an abradable coating, since each of the sensors may become exposed at a different time as the coating undergoes wear due to abrasion.

While US 2004/202886 thus suggests a sensor system to monitor wear of a surface it seems necessary for the system to comprise a thermal barrier coating. Furthermore, the system appears ill-suited to monitor gradual wear, e.g. of a few micrometers, since the system relies on stacked sensors thus limiting the system to monitor stepwise changes.

WO 2010/135011 relates to electrical sensors for detecting surface reduction wear, particularly wear on curved components such as spring clips in combustion turbine engines. The sensors are designed for monitoring wear on surfaces in contact with surfaces of a different shape, so that a substrate surface has a wear starting position, where a sensor element is installed on an area of the substrate at a single level relative to the surface, and the sensor element has a proximal portion and a distal portion relative to the wear starting position. An electrical measuring circuit connected to the sensor element measures an electrical characteristic of the sensor element that varies with a progressive reduction of the sensor element from the proximal portion to the distal portion of the sensor during a widening reduction wear of the surface from the wear starting position. The sensor element may have a plurality of nested electrical conductor loops, e.g. in the shape of rungs between rails, wherein the widening reduction wear successively breaks the respective loops, or the sensor element may comprise a film of an electrically conductive material. The sensor element may be deposited on a substrate or within or on a wear-resistant layer such as a metal, ceramic, or cermet coating on a substrate using a thin film deposition process such as plasma spraying, electron beam physical vapour deposition, chemical vapour deposition, pulsed laser deposition, mini-plasma, cold spray, direct-write, mini high velocity oxy-fuel, or solution plasma spraying, for example. The substrate may be metal or another material such as a ceramic or ceramic matrix composite. The sensor element may also be located in a trench or depression cut into the substrate, which may be coated with electrical insulation before deposition of the sensor element and finally coating the sensor element with electrical insulation. An exemplary material for the sensor element is Ni-Cr. WO 2010/135011 does not disclose other sensor materials than Ni-Cr, and further the limitation to thin film deposition processes for deposition of the sensor makes the process ill suited for deposition of more complex materials, e.g. conductive ceramics. Moreover, WO 2010/135011 does not show any concern to the thermal expansion coefficient of the sensor material, which may be relevant for certain applications of wear sensors, such as for use in an injection mould. Likewise the required different shapes of the substrate and the opposing surface demonstrate that the substrate with the sensor is not of use in an injection mould.

In view of the prior art there is a need to provide a sensor system capable of gradually monitoring wear, in particular to gradually monitor wear on a surface of a few micrometers. There is further a need for a sensor system capable of monitoring wear on a surface exposed to different conditions at different location on the surface in order to provide an integrated picture of wear on the surface. Finally, there is a need for a sensor system capable of operating at high temperature, and especially over a broad range of temperatures.

It is an aim of the present invention to provide a sensor system addressing these needs.

**Disclosure of the invention**

The present invention relates to a sensor system for monitoring wear on a surface comprising a substrate of a base material, the substrate having a surface with a recess;
a sensor comprising an electrically conductive ceramic material selected from a Magnéli phase ceramic material, a MAX phase ceramic material or a combination thereof, the sensor having a wear surface and a first electrical contact area in communication with a first electrical conductor and a second electrical contact area in communication with a second electrical conductor,
the sensor being embedded in an electrically insulating material so that the wear surface is exposed to allow contact with the wear surface and the first and the second electrical conductors being in communication with a signal interpretation circuit, and
the electrically insulating material being embedded in the recess to electrically insulate the sensor from the substrate.

The electrically conductive ceramic material will be chosen to have a resistivity which is large enough to realise a measurable change in resistance (e.g. in the order of 100 $\Omega$) when the surface is worn. When the substrate surface, and thereby the sensor, i.e. the wear surface of the sensor, is exposed to wear material will be removed from the sensor and thus increase the electrical resistance of the sensor. Thereby, wear on the surface may be calculated from the measured resistance of the sensor when a current, e.g. a DC-current or a low frequency AC-current, is applied through the sensor. The resistance is not necessarily measured directly but may be calculated by the skilled person from measurements and knowledge of the electrical potential difference and the current. For an exemplary sensor with a length of 5 mm, and width and depth of 500 $\mu$m and a value for the resistivity of the material (p) of 5000 $\mu\Omega$.cm, the resistance of the sensor is given by Ohm's law as $10^4$ $\Omega$. Thus, if the depth of the cell is reduced by 5 $\mu$m due to wear the resistance changes by 100 $\Omega$, a very measurable change in resistance.

The sensor system advantageously allows gradual monitoring of wear on a surface, compared to systems of the prior art generally allowing only stepwise monitoring of wear. With "gradual" is meant that the resistance may be measured at a resolution provided by the sensitivity of measuring equipment combined with the resistivity of the sensor material. For example, the higher the resistivity of the sensor material the higher the resolution of the resistance measurement. It is preferred that the electrically conductive ceramic material has a resistivity of 100 $\Omega$m to 1000 $\Omega$m, but it is not limited to this range. The measured resistance is correlated with shape and dimensions of the sensor to calculate the wear expressed in units of length, e.g. $\mu$m.

The dimensions of the recess of the substrate may be chosen freely. However, in a specific embodiment the recess has a largest cross-sectional dimension of about 10 to about 1000 $\mu$m, and in a further embodiment the recess has a length of about 1 to about 20 mm. The dimensions of the sensor will correspond to those of the recess while considering that the sensor is embedded in an electrically insulating material. For example, the sensor may have a largest cross-sectional dimension of about 5 $\mu$m to about 900 $\mu$m, such as about 500 $\mu$m. The cross-sectional shapes of the recess and the sensor are not limited, although in specific embodiments the sensor has a cross-sectional shape selected from rectangular, square, oval, round, triangular, and trapezoid. The cross-sectional shape of the sensor may be chosen to provide a certain "wear profile" regarding the resistance of the sensor. For example, a sensor with a broader profile at the wear surface than at the surface opposite the wear surface may provide a stronger than linear increase in resistance upon wear.

The electrical current is applied through the sensor from the first to the second electrical contact area via the electrical conductors. In a further embodiment the sensor system comprises a plurality of electrical contact areas each in communication with an electrical conductor in communication with the signal interpretation circuit. The electrical conductors will be in discrete communication with the signal interpretation circuit. When the sensor comprises a plurality of electrical contact areas the sensor will be functionally divided into a number of resistive cells corresponding to the number of electrical contact areas. The signal interpretation circuit can measure an electrical parameter for each resistive cell or a combination of resistive cells so that the resistance of individual resistive cells may be estimated. The resistance of a resistive cell in a sensor with multiple resistive cells may be used to estimate wear of that resistive cell, and thereby a map of wear may be recorded by the sensor system by comparing the wear and the position of each resistive cell in a surface.

In an embodiment of the invention the sensor system comprises a plurality of sensors as defined above. In yet another embodiment the sensor system further comprises a reference element of the electrically conductive ceramic material, the reference element having a first electrical contact area in communication with a first electrical conductor and a second electrical contact area in communication with a second electrical conductor each electrical conductor being in communication with the signal interpretation circuit,
the reference element being embedded in the electrically insulating material to prevent contact with the reference element, and
the electrically insulating material being embedded in a recess in the substrate material to electrically insulate the sensor from the substrate. The reference element allows that the sensor system is calibrated, e.g. with respect to temperature. For example, the resistance of the reference electrode may be measured to provide a reference value of resistance of the ceramic material of the sensor thus providing an improved estimate of the wear of the sensor. The reference element may be embedded in the same recess as the sensor, or the reference element may be embedded in a separate recess in the substrate.

Any Magnéli phase ceramic material or any MAX phase ceramic material may be used for the sensor, or the sensor may comprise a combination of such materials. However, it is preferred that the ceramic material comprises titanium. In an embodiment the Magnéli phase ceramic material comprises an oxide of a metal selected from Ti, V, Cr, Nb, Mo, Ce, Pr, and Tb, and in a preferred embodiment the Magnéli phase ceramic material is $Ti_nO_{2n-1}$. In another embodiment the MAX phase ceramic material is of the general formula $M_{n+1}AX_n$, where n = 1 to 3 and M is selected from Ti, Sc, Zr, Hf, V, Mb, Ta, Cr, and Mo, and A is selected from Al, Cd, Ga, In, Tl, Si, Ge, Sn, Pb, P, As, and S, and X is C or N. A preferred MAX phase ceramic material is $Ti_2AlC$.

The base material of the substrate will generally be of the same material as the material of the surface of interest for monitoring wear. The base material may be conducting or non-conducting, and when the base material is non-conducting it may be the same material as the electrically insulating material. Typical base materials comprise metals, such as steel, stainless steel, bronze, brass, aluminium etc., or ceramic materials.

The electrically insulating material is not limited but will typically comprise a ceramic material, such as a low melting lead-free solder glass (>50% $Bi_2O_3$) It is preferred that the materials of the sensor system, e.g. the base material, the electrically conductive ceramic material and the electrically insulating material have comparable wear characteristics. Wear characteristics comprise any property of a material that affects how the material is worn, e.g. by friction, of the material. Specific wear characteristics comprise hardness, elasticity, plasticity, ductility, brittleness, toughness, etc. It is further preferred that the materials of the sensor system have comparable thermal expansion coefficients.

In an embodiment of the invention the substrate of the sensor system comprises an engagement means for engagement with a complementary engagement means. Any engagement means allowing the substrate to be fitted to or in a surface to be monitored for wear may be used in the invention. In a specific embodiment the engagement means comprises an external thread and the complementary engagement means comprises an internal thread, e.g. located in a depression or the like in a surface.

The sensor system comprises a signal interpretation circuit, which is capable of measuring an electrical parameter of the current applied through the sensor. The signal interpretation circuit may use the measurement to calculate the resistance of the sensor and to estimate the resistance of a resistive cell of the sensor. The resistance values of the sensor or of a resistive cell may be used to calculate the wear of the sensor or the resistive cell. The signal interpretation circuit may then provide a map of wear of the surface. The signal interpretation circuit may comprise an electrical power source to apply a current through the sensor. Any power source capable of delivering a DC-current or low frequency AC-current is appropriate. The electrical power source is typically capable of delivering 6 W of power, e.g. at 300 mA.

The signal interpretation circuit may be integrated with the substrate or external to the substrate, and it may further comprise a data transmitter for wireless data communication, e.g. of an electrical parameter to a data processing unit.

In another aspect the invention relates to a method of recording a map of wear on a surface, the method comprising the steps of:

> providing a sensor system of the invention;
> applying a current through the sensor, measuring the electrical potential difference in the sensor and calculating the total resistance of the sensor;
> calculating a wear depth of the sensor from the resistance of the sensor;
> creating a map of wear on the surface from the calculated wear depth of the sensor by correlating the calculated wear depth with the location on the surface of the sensor. When the wear surface of the sensor is worn the resistance of the sensor will increase, and thereby the resistance of the sensor may be correlated with wear of the sensor and thereby wear of the surface. Any sensor as defined above may be used in the method of the invention. The position of the sensor in the surface may be used to create a map of wear in the surface. In particular, the map of wear may comprise several measuring points in the surface, for example using a sensor system with a plurality of sensors.

In another embodiment the sensor system comprises a sensor with a plurality of electric contact areas as defined above. A section between two contact areas may define a "resistive cell", for example resistive cells may be defined between the first and the second or the fifth and the sixth electrical contact areas. A resistive cell is not limited to consecutive electrical contact areas, and a resistive cell may be defined between any two electrical contact areas in the sensor, e.g. between the second and the sixth electrical contact areas. Several resistive cells may also be considered in combination to make up a single resistive cell for the sake of estimating resistance and calculating wear depths. Thus, in an embodiment of the invention employing a sensor system with a plurality of electrical contact areas the method comprises applying a current through the sensor, measuring the electrical potential difference in the sensor and calculating the total resistance of the sensor;

measuring the electrical potential difference of a resistive cell defined between a first electrical contact area and a second electrical contact area;
estimating the resistance of the resistive cell;
calculating a wear depth of the resistive cell from the estimated resistance of the resistive cell;
creating a map of wear on the surface from the calculated wear depth of the resistive cell by correlating the calculated wear depth with the location on the surface of the resistive cell.

In another preferred embodiment the method employs a sensor system comprising a reference element as defined above, and the method further comprises the step of temperature calibrating the estimated resistance. The current applied may be a DC current although a low frequency AC current can also be used. The recorded map of wear may be a 3D-map. In this context a "3D-map" refers to a map of wear provided using multiple resistive cells in the same surface, e.g. multiple sensors with a first and a second electric contact area, or one or more sensors with a plurality of resistive cells where the one or more sensors are arranged with e.g. parallel sections or the like. Thus, the resistive cells of the sensor(s) cover the two dimensions of the surface and the third dimension of the 3D-map is made up of calculated wear depths from the resistive cells. The map, e.g. a 3D-map, may be recorded over time as a gradual change in wear.

Another aspect of the invention relates to the use of the sensor system of the invention. The sensor system may be used with any surface for which it is relevant to monitor wear, e.g. a surface subjected to friction. The sensor system of the invention is especially suited for monitoring wear at high temperatures, e.g. in the temperature range of about 100°C to about 500°C. When the sensor system is used to monitor wear at high temperature it is preferred that it comprises a reference element.

It is to be understood that the sensor system of the invention is not limited to the embodiments explicitly described herein, since the features of the described embodiments may combined freely. Likewise the method of the invention may employ any embodiment of the sensor system explicitly described, or it may employ an embodiment comprising combinations of the features described herein. Further, any embodiment derivable from combinations of features described herein may be used in the invention at any conditions described.

## Brief description of the figures

In the following the invention will be explained in greater detail with the aid of examples of embodiments and with reference to the schematic drawings, in which

Fig. 1A shows a perspective drawing of the sensor system of the invention;
Fig. 1B shows an exploded drawing of the sensor system of the invention;
Fig. 2 shows a circuit schematic of an array of resistive cells in an embodiment of a sensor system of the invention.
Fig. 3 shows a circuit schematic of an array of resistive cells in an embodiment of a sensor system of the invention.
Fig. 4 shows a circuit schematic of an array of resistive cells in an embodiment of a sensor system of the invention.
Fig. 5A shows the profile of a laser machined recess.
Fig. 5B shows a perspective illustration of a laser machined recess.
Fig. 6 shows an XRD spectrum of a $Ti_nO_{2n-1}$ specimen.
Fig. 7 shows AC conductivity of a Magnéli phase ceramic material of $Ti_nO_{2n-1}$.

## Detailed description of the invention

The present invention relates to a sensor system for monitoring wear on a surface, as it is defined above. In another aspect the invention relates to a method of recording a map of wear on a surface using the sensor system. In particular, the map of wear may be a 3D-map of wear. In a further aspect the invention relates to the use of the sensor system to monitor wear on a surface, e.g. in the temperature range of about 100°C to about 500°C.

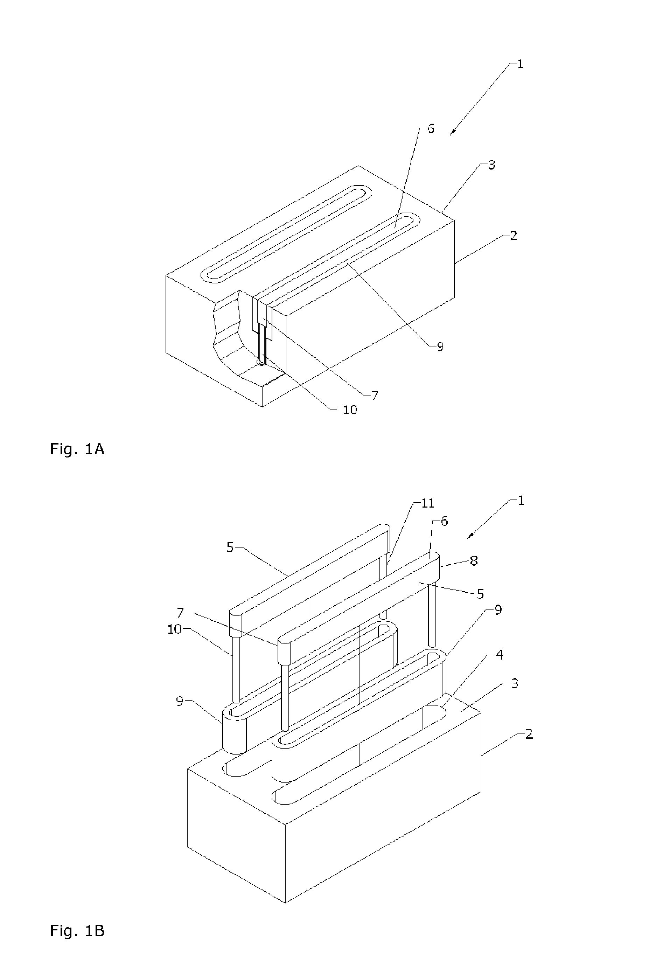

The sensor system 1 is illustrated in Fig. 1A showing the substrate 2 having a surface 3 with a recess 4 and a sensor 5 having a wear surface 6 and a first electrical contact 7 and a second electrical contact area 8. The sensor is embedded in an electrically insulating material 9. The first electrical contact area 7 is in communication with a first electrical conductor 10 and a second electrical contact area 8 is in communication with a second electrical conductor 11. Fig. 1A shows a perspective drawing of the sensor system 1 and Fig. 1B shows an exploded drawing of the sensor system 1.

Within the context of the present invention the term "wear" is to be understood in its broadest sense. In particular the term wear relates to wear that may occur at a surface, which is exposed to abrasion during normal use, and the sensor system of the invention is relevant to any area where surfaces, e.g. steel surfaces, are subject to continuous or non-continuous friction. For example, wear may occur when a surface is abraded by contact with solid objects or particles, or wear may occur when a surface is exposed to liquids or gases.

Wear can be described as removal of material from the surface due to the abrasion occurring during normal use, and wear may be expressed in terms of depth of removal from the surface and is generally expressed in units of length, e.g. as $\mu$m of material removed from the surface. The sensor system of the present invention can detect and measure wear, i.e. has a resolution, at micrometer scale, e.g. in increments of about 2 $\mu$m. For example, the sensor system of the invention can measure wear below 1 mm, for example the sensor system can measure wear of about 500 $\mu$m, about 400 $\mu$m, about 300 $\mu$m, about 200 $\mu$m, about 100 $\mu$m, about 50 $\mu$m, about 40 $\mu$m, about 30 $\mu$m, about 20 $\mu$m, about 10 $\mu$m, about 9 $\mu$m, about 8 $\mu$m, about 7 $\mu$m, about 6 $\mu$m, about 5 $\mu$m, about 4 $\mu$m, about 3 $\mu$m, about 2 $\mu$m, or about 1 $\mu$m. Wear may also be referred to as "structural health", and in the context of the invention the terms "wear" and "structural health" may be employed interchangeably. Surfaces of particular relevance to the present invention are surfaces of injection moulds, surfaces of components of brakes, in the planetary gear in wind mill nacelles, cutting tools, dyes for extrusion, in the automotive industry, such as for driveshafts, gears, brake pads.

The sensor system of the present invention can monitor wear on a surface. The term "monitor" refers in the broadest sense to any operation to detect and measure wear on a surface. For example, wear may be monitored to determine when a the object with the surface, e.g. the mould or flange of an injection mould, is worn out or damaged ensuring that it can be replaced before production breaks down. In particular, the sensor system is capable of doing non-invasive real time measurements during production, thus avoiding a stop in the production to dismantle the equipment for microscopic examination of wear on the surface of the production equipment. Wear may be monitored continuously, or wear may be measured at certain points in time. In both cases the sensor system of the invention allows gradual measurement of wear.

The sensor system 1 of the present invention comprises a sensor 5 having a wear surface 6. The term "wear surface" refers to it that the wear surface 6 of the sensor 5 is embedded in the substrate 2 so that the wear surface 6 is exposed to the same conditions, e.g. regarding abrasion of the surface, as the remaining surface 3 of the substrate 2. In particular the sensor system 1 may be mounted or fitted in the surface of a piece production equipment, e.g. the mould or flange of an injection mould. Thus, when the surface 3 in which the sensor 5 is fitted is exposed to wear, the sensor 5, i.e. at the wear surface 6, will be exposed to the same wear allowing monitoring of the wear on the surface 3. Preferably, the sensor material will wear at a rate comparable to the wear of the substrate surface 3. Thus, the material of the sensor 5 preferably has wear characteristics comparable to those of the substrate material. The wear characteristics comprise characteristics such as hardness, elasticity, plasticity, ductility, brittleness, toughness, etc. Hardness may for example be expressed as "Vickers hardness", which is well known to the skilled person. Within the context of the invention "comparable wear characteristics" means that the wear characteristics, in particular hardness, of the sensor material are within about 50%, about 20%, about 15%, about 10%, about 5%, about 2%, or about 1%, of those of the substrate material. Furthermore, it is preferred that the sensor material has thermal expansion characteristics comparable to those of the substrate material, e.g. a thermal expansion coefficient within about 50%, e.g. about 40%, about 30%, about 20%, about 15%, about 10%, about 5%, about 2%, or about 1%, of those of the substrate material. It has been found that when the thermal expansion coefficients are comparable the sensor system of the invention will not be affected by tension due to changes in temperature. For example, when the thermal expansion coefficient of the sensor material is within 50% of the thermal expansion coefficient of the substrate material cracks or the like will not occur in the system, the substrate or the sensor material within the preferred operating range of temperatures of about 5°C to about 500°C. Likewise, when the wear characteristics, especially the hardness, are comparable the sensor system will provide measurements of wear reflecting the wear of the substrate material.

The electrically conductive ceramic material is selected from a Magnéli phase ceramic material, a MAX phase ceramic material or a combination thereof. For example, the electrically conductive ceramic material may be a single Magnéli phase material or a single MAX phase ceramic material, or the electrically conductive ceramic material may comprise a combination of several Magnéli phase materials or several MAX phase materials or a combination of Magnéli phase materials and MAX phase materials. In general, "combination" refers to discrete sections of different materials combined in a single sensor. For example, a single sensor may comprise a stack of two or more different materials, which are stacked along the length axis of the sensor or along a cross-sectional axis of the sensor. Both Magnéli phase materials and MAX phase materials are well-known to the skilled person. In general, a "Magnéli phase ceramic material" is a sub-stochiometric metal oxide ceramic material, for example comprising a metal selected from Ti, V, Cr, Nb, Mo, Ce, Pr, and Tb. The Magnéli phase ceramic material may also comprise several different metals. A preferred Magnéli phase ceramic material is $Ti_nO_{2n-1}$, where n is from 4 to 10. A "MAX phase ceramic material" may generally be represented by the chemical formula $M_{n+1}AX_n$, where n = 1 to 3 and M is selected from Ti, Sc, Zr, Hf, V, Mb, Ta, Cr and Mo, and A is selected from Al, Cd, Al, Ga, In, Tl, Si, Ge, Sn, Pb, P, As and S, and X is C or N. A preferred MAX phase ceramic material is $Ti_2AlC$. It is however also contemplated that the electrically conductive ceramic material may be a carbide, such as silicon carbide, boron carbide or titanium carbide.

The electrically conductive ceramic material and the dimensions, e.g. the length and cross-sectional area and shape, of the sensor 5, are chosen so as to provide a measurable change in resistance when the substrate surface 3 and the sensor 5 are worn to a desired depth, such as about 1 $\mu$m to about 10 $\mu$m, e.g. about 5 $\mu$m. The minimal wear that can be detected by a sensor system 1 of the invention is referred to as the "resolution". The dimensions of the sensor 5 are not particularly limited, but it is preferred than the largest cross-sectional dimension of the sensor is from about 10 $\mu$m to about 1000 $\mu$m, for example from about 100 $\mu$m to about 500 $\mu$m, such as about 100 $\mu$m, about 200 $\mu$m, about 300 $\mu$m, about 400 $\mu$m, or about 500 $\mu$m. A preferred largest cross-sectional dimension of the sensor 5 is from about 100 to about 200 $\mu$m. The cross-sectional shape of the sensor 5 may be chosen freely, although in specific embodiments the cross-sectional shape is selected from rectangular, square, oval, round, triangular, and trapezoid. The shape may be rectangular or square when it is desired that there is a linear increase in resistance upon wear on the surface in order to easily monitor a gradual increase in resistance, and thereby wear. In other embodiments the cross-sectional shape of the sensor 5 is chosen so that the sensor 5 is broader at the wear surface than at the "bottom" of the sensor, e.g. the shape may be triangular or trapezoid. This will allow that the change in resistance upon wear of the surface is stronger than the linear change provided by a rectangular or square cross-section.

The sensor system 1 may be fitted, mounted or integrated in the surface of an object, e.g. a piece of production equipment. The sensor system 1 comprises a substrate 2 of a base material, and preferably the base material of the substrate 2 is the same as the base material of the object in which the sensor system is fitted or integrated. The "base material" may be any material used for equipment or parts subject to wear. Exemplary base materials are metals, such as steel, stainless steel, bronze, etc., or ceramic materials. The base material may be conductive or non-conductive.

The sensor 5 of the sensor system 1 is embedded in an electrically insulating material 9, which serves to prevent currents applied through the sensor 5 from passing through the base material. However, it is contemplated that when the base material is electrically non-conducting the electrically insulating material 9 may be the same as the base material. The electrically insulating material 9 is not particularly limited, in particular since the layer of insulating material 9 is thin, e.g. a few $\mu$m thick, such as from about 1 $\mu$m to about 100 $\mu$m, or about 1 $\mu$m to about 10 $\mu$m the material properties, including the hardness and the thermal expansion coefficient, are not limiting. However, it is preferred that the wear characteristics and thermal expansion coefficient of the electrically insulating material 9 is in the same order of magnitude compared to that of the substrate material, as defined above for the sensor material. Appropriate electrically insulating materials comprise $Bi_2O_3$. The electrically insulating material 9 may also be referred to as an "enamel" and the terms are used interchangeably throughout this document.

The sensor 5 of the sensor system 1 is embedded in an electrically insulating material 9, which in turn is embedded in the substrate material. Thus, the sensor 5 is electrically insulated from the substrate material, while the wear surface 6 of the sensor is exposed to allow contact with the wear surface 6 to expose the sensor 5 to the same conditions as the substrate material. It is preferred that the wear surfaces 6,3 of the sensor 5 and the substrate material are in the same plane, or tangential plane, as the substrate material and the electrically insulating material 9. The substrate 2 has a surface 3 with a recess 4, in which the electrically insulating material 9 is embedded. The term "recess" refers to any depression or the like into which the electrically insulating material 9 and the sensor 5 can be embedded, and the recess 4 may also be referred to as a "groove", a "scratch", a "furrow" or the like. The recess 4 may be provided in the substrate material using any appropriate method. For example, the recess 4 may be created in the substrate material using laser ablation, e.g. using a femtosecond laser, a diode laser, a $CO_2$-laser, etc., embossing, micromachining, or the like, or the substrate material may be cast or moulded to have a recess 4. The recess 4 preferably has a largest cross-sectional dimension of about 10 to about 1000 $\mu$m, e.g. about 100 $\mu$m to about 500 $\mu$m, for example the depth or width of the recess 4 may be about 10 to about 1000 $\mu$m or about 100 $\mu$m to about 500 $\mu$m. The shape of the recess 4 is not limited, but it must accommodate the sensor 5 and the electrically insulating material 9, in case one is needed to electrically insulate the sensor 5 from the substrate material. The shape of the recess 4 may particularly be chosen independently from the shape, e.g. cross-sectional shape, of the sensor 5. For example the recess 4 may have a rectangular, square, or semicircular shape etc.

The sensor 5 has a first electrical contact area 7 in communication with a first electrical conductor 10 and a second electrical contact area 8 in communication with a second electrical conductor 11. Thus, an electrical current, e.g. a DC-current or a low-frequency AC-current, may be applied through the sensor 5 via the electrical contact areas 7,8. In other embodiments the sensor 5 may have more than two, e.g. a plurality of, electrical contact areas with each electrical contact area being in communication with an electrical conductor, and with the electrical conductors in communication with the signal interpretation circuit. The electrical contact areas may be located anywhere on the sensor, although it is preferred that the wear surface does not comprise electrical contact areas. In its simplest form the sensor has the first and second electrical contact areas, and in this form applying a current from the first to the second electrical contact area through the sensor allows monitoring of an average value of the wear over the distance between the first and second electrical contact area, e.g. the length of the sensor, by measurement of the resistance.

The length of the sensor 5 is not limited and may be chosen to reflect the object with the surface for monitoring wear and its use. In certain embodiments the sensor system 1 monitors wear over a large relative section of the surface, e.g. on the surface of a mould of an injection mould, and in other embodiments the sensor system monitors wear at points on the surface of interest. In general, the sensor 5 will have a uniform cross-sectional shape and dimensions along its length. In certain embodiments the sensor system 1 has one or more sensors of a length from about 1 mm to about 20 mm.

The shape of the sensor 5 along its length, especially the wear surface 6 of the sensor, will generally reflect the shape of the surface of the substrate in which the sensor 5 is fitted. Thus, the sensor 5 may have a wear surface 6 following a straight line, or the wear surface 6 may be curved to follow the curved surface of the substrate 2. The sensor 5 need not follow a straight line in the plane of the surface 3 of the substrate 2, but it may have a more complex shape. For example, the sensor 5, and thereby also the wear surface 6 of the sensor 5, may have a sinusoidal shape or the like, or the sensor 5 may have the shape of a spiral. In particular, a single sensor 5 may be designed to "map" a large portion of a substrate surface by careful design of the sensor 5, e.g. a tubular substrate may be fitted with a helical sensor helically extending from one end of the tube to the other on the surface exposed to wear. In a certain embodiment the sensor system comprises a plurality of sensors arranged in parallel or a single sensor arranged with parallel sections, e.g. in a meander shape or in a spiralling pattern. The distance between sensors arranged in parallel or between sections of a single sensor arranged in parallel may be determined from the substrate material and the typical wear it will be subjected to. For example, when sensors of a width of about 100 $\mu$m to about 500 $\mu$m are placed in the surface at a distance of about 5 mm to about 50 mm, e.g. about 10 mm or about 20 mm, it is possible to fully map the surface. Likewise a surface may be fully mapped using a plurality of short sensors, e.g. sensors with a length of about 1 mm to about 5 mm, located at distances of about 5 mm to about 50 mm from each other.

In a preferred embodiment the sensor comprises a plurality of electrical contact areas along the length of the sensor. The electrical contact areas may be distributed regularly or at predetermined locations along the length of the sensor. In this case each sensor becomes a series array of resistors (or resistive cells) whose differential changes under wear can be measured. For example a tubular substrate may be fitted with a sensor surrounding the perimeter of the substrate to provide a map of the wear along the perimeter.

In a further embodiment the sensor system comprises a plurality of sensors. These may be set up as a number of point sensors in the surface, or each sensor may be set up in the surface with a plurality of electrical contact areas along the length of each sensor, so that each sensor may serve as a series array of resistors as described above.

Either of the embodiment with a plurality of sensors or the embodiment with a single sensor with a plurality of electrical contact areas provide that a 2D array (or mesh) of resistive cells is realised, allowing that a 3D record of wear is provided using what is in effect a form of resistance tomography. In these embodiments it is thus possible to give a detailed picture of wear over the surface to localise sections of the surface, e.g. in the mould of an injection mould, that are more prone to wear. It is also possible to combine the embodiments so that a single substrate has a plurality of sensors each with a plurality of electrical contact areas. These embodiments allow detection of wear in points, e.g. specific points, that may necessitate replacement of the object with the surface; this information may not necessarily be provided using a sensor system yielding an average reflection of wear over the surface.

In a certain embodiment the sensor system comprises a reference element. In the context of the invention a "reference element" is an element allowing the sensor system to be calibrated, e.g. regarding temperature. The reference element is thus made from the same electrically conductive ceramic material, or combination of electrically conductive ceramic materials, as the sensor of the sensor system, but it does not have a wear surface and it is embedded in electrically insulating material of the same type as the sensor is embedded in, so that the electrically insulating material prevents contact with the reference electrode, and the reference element is not exposed to wear. Thereby the reference element allows that the resistance measured in the sensor can be calibrated with a resistance measured in the reference element. In particular, the reference element, e.g. when located close, such as within 10 mm, within 5 mm or within 1 mm, of the sensor will be at the same temperature as the sensor, which may thus be calibrated.

The sensor comprises electrical contact areas in communication with electrical conductors. The "electrical conductor" may be any material allowing conduction of a current, so that a current may be passed through the sensor. When the substrate material is electrically conducting, the electrical conductors will be electrically insulated from the substrate material. When the substrate material is electrically non-conducting no electrical insulation of the conductors is required, although electrical insulation of the conductor may still be present. The electrical conductors may be located in a planar style using extra recesses, or tracks, placed under the surface of the object (e.g. buried below the wear plane) or alternatively through the back of the substrate material using vias, or vias may lead the electrical conductors out of the sides of the substrate material. In general, an electrical conductor from an electrical contact area will not be in direct electrical communication with an electrical conductor from a different contact area.

Two of the electrical conductors of the sensor system will be positioned as a "first" and a "last" electrical conductor relative to the sensor so that the first and the last electrical conductor allow a current to be applied through the sensor. In the embodiment where the sensor only comprises two electrical conductors the electrical contact areas may be referred to as "first" and "second" electrical contact areas, and the "second electrical contact area" will provide a "last" electrical contact area regarding application of a current through the sensor. The section of the sensor between two electrical contact areas is generally referred to as a "resistive cell", so that a sensor with a plurality of electrical contact areas may be considered to comprise a number resistive cells corresponding to the number of electrical contact areas. In embodiments where the sensor comprises two or more of such resistive cells an electrical parameter, e.g. an electrical potential difference, may be measured for an individual resistive cell. For example, an electrical potential difference may be measured between an electrical contact area upstream of another electric contact area relative to the flow of the current. This in turn allows that the resistance of the individual resistive cell is estimated to provide an estimate of wear for this resistive cell, and thereby the corresponding section of the sensor.

Estimation of the resistance of sections between two electrical contact areas is not limited to sections between two consecutive electrical contact areas. For example, the resistance may be estimated in a section of the sensor between a third and a fifth electrical contact area, as well as between the third and the fourth or between the fourth and the fifth electrical contact area. In a specific embodiment one or more the electrical conductors may comprise a switch, e.g. a single-pole switch, to shut off the flow of current through that conductor. When an electrical conductor comprises a switch, the switch may be located anywhere along the electrical conductor, including as part of the signal interpretation circuit. The requirement for a switch is that it can shut off the flow of current between its corresponding electrical contact area and the signal interpretation circuit. It is preferred that the characteristics, e.g. the resistance and impedance, of the conductors and elements of the signal interpretation circuit are well-characterised in order to improve the performance of the sensor system.

The sensor system with a sensor with a plurality of electrical contact areas, and thus resistive cells, may provide a "map" of wear over the length of the sensor. A map of wear may also be created using a plurality of sensors comprising only a single resistive cell, or a map of wear may be provided using a combination of single-resistive cell sensors and multi-resistive cell sensors. In certain embodiments the positioning, length and design of the sensor or sensors is chosen to cover and represent a large relative area of a substrate surface. In other embodiments a single resistive cell sensor may be sufficient to estimate wear on a surface.

The electrical conductors of the sensor system are in communication with a signal interpretation circuit. The "signal interpretation circuit" broadly refers to an electrical circuit capable of measuring an electrical parameter, e.g. an electrical potential difference, in particular of the sensor or the reference element, if present. The signal interpretation circuit may also comprise means to display the measured electrical parameter, and it may comprise a data processing unit capable of performing calculations, e.g. to estimate the resistance of a resistive cell of the sensor or of the whole sensor. When the sensor system comprises a reference element the signal interpretation circuit may calibrate the sensor system with respect to operating temperature of the sensor system. The signal interpretation circuit may further comprise data storage means, and the data storage means may comprise algorithms for performing relevant calculations and estimating resistances. The data storage means may further store data, e.g. data retaining to electrical parameters, obtained from the sensor. For example, the data storage means may store data obtained over a specified period of time, e.g. 1 hour, 2 hours, 5 hours, etc., for later displaying to an operator. The signal interpretation circuit may also comprise an electrical power source for applying a current through the sensor and for measuring an electrical parameter. For example, the signal interpretation circuit may comprise a battery, or the signal interpretation circuit may be equipped with an element capable of generating electricity, such as a piezoelectric element, a Peltier element, a solar cell or the like. In other embodiments the sensor system, and thereby the signal interpretation circuit, is provided with electrical power from an external source.

In one embodiment the signal interpretation circuit is external to the substrate, and in another embodiment signal interpretation circuit is integrated in the substrate. In a specific embodiment, e.g. when the signal interpretation circuit is integrated in the substrate, the signal interpretation circuit may further comprise a data transmitter for wireless communication. The wireless communication may be to a data processing unit or to a display means or the like. Data may be transmitted using any appropriate protocol for wireless data transmission, such as those defined under the IEEE 802.15 standard ("Bluetooth") or the IEEE 802.11 standard, also known as "WiFi". In a certain embodiment data may be transmitted to an external device, such as a mobile user terminal. With "mobile user terminal" is meant any portable computing device, such as a mobile telephone, smart phone, personal digital assistant, portable computer, tablet computer or the like. The mobile user terminal is preferably a computing device employing Apple iOS, Android, Symbian, Windows Phone or similar operating systems.

In an embodiment of the invention the substrate of the sensor system comprises an engagement means for engagement with a complementary engagement means. For example, the sensor system including the signal interpretation circuit with an electrical power source and a data transmitter for wireless communication may be integrated in a substrate with an engagement means for engagement with a complementary engagement means. This allows that the substrate with the sensor system is fitted into a surface, such as the surface of a piece of production equipment, e.g. the mould or flange of an injection mould. It is preferred that the base material of the substrate is the same as the base material of the production equipment. The engagement means and the complementary engagement means may be an external thread, e.g. a helical thread on the substrate and an internal thread, e.g. a helical thread on the surface to be monitored, respectively, such that that e.g. the sensor system basically is formed as a screw that may be screwed into the substrate or the sensor system may be glued or welded to the surface of the substrate.

In another aspect the invention relates to a method of recording a map of wear on a surface. The sensor of the sensor system of the invention may define one or more resistive cells. For example, the sensor may comprise $N$ electrical contact areas to define $N$ resistive cells, e.g. between an electrical contact area $n$ and electrical contact area $n-1$; throughout this document this resistive cell may be referred to with a number corresponding to $n$. In a specific embodiment the sensor system comprises $N$ electrical contact areas, wherein $N$ is an integer of 3 or higher and the method comprises the steps of: applying a current through the sensor, measuring the electrical potential difference in the sensor between the first and the $N^{th}$ electrical contact area and calculating the total resistance of the sensor; measuring the electrical potential difference of a resistive cell defined between an electrical contact area n and an electrical contact area $n-1$, wherein $n$ is an integer between 2 and $N$; estimating the resistance of the resistive cell; calculating a wear depth of the resistive cell from the estimated resistance of the resistive cell; creating a map of wear on the surface from the calculated wear depth of the resistive cell by correlating the calculated wear depth with the location on the surface of the resistive cell. Each sensor thus defines a series array of resistive cells (or resistors) whose differential changes under wear can be measured using signal processing techniques as described below. In a certain embodiment, there is a number of e.g. parallel grooves, and a 2-D array (or mesh) of resistive cells is realised, providing a 3-D record of wear using what is in effect a form of resistance tomography. The total resistance of the sensor, $r_{tot}$, is the sum of the resistances of the resistive cells:

$$r_{tot} = r_1 + r_2 + ... + r_n = \sum_{i=1}^{n} r_i$$

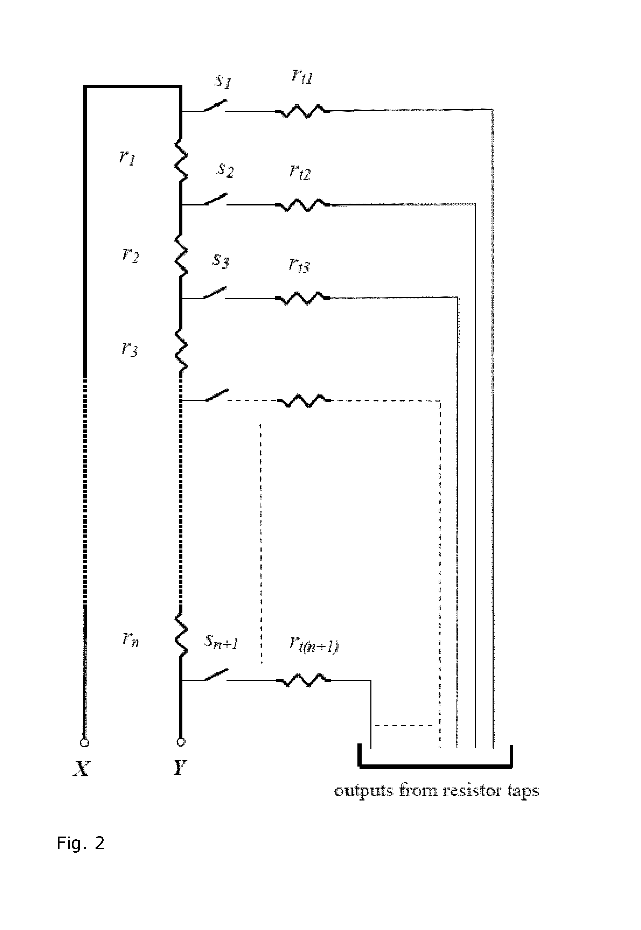

A general plan (electrical equivalent circuit) of an arrangement for use in the method of the invention is shown in Fig. 2. In this arrangement each node has a single- pole switch connected in series with it for selection purposes to measure the electrical potential difference and estimating resistances of individual resistive cells. The ON resistance of each switch plus the 'access' resistance of the track are represented by the resistors $r_{ti}$ in the figure. The switches, which will be connected externally, will be electrically programmable units e.g. MOSFETs (or metal- oxide- semiconductor field- effect- units) with an ON resistance of a few 10s of ohms at most. The track resistances will be much less. The available 2D- resolution of the map of wear depends on the spacing of the mesh and will be governed by the requirements of the application. In Fig. 2 the X and Y denote the connections to an electrical power source; $r_1$, $r_2$, ... $r_n$ denote the resistances of the resistive cells, The nodes between the individual cells are connected to terminals via the switches $s_1$, $s_2$, ... $s_n$ the total access resistance (i.e. ON resistance of the switches plus track resistance) being $r_{t1}$, $r_{r2}$, ... $r_{t(n+1)}$. This approach has the virtue of technological simplicity and hence cheapness.

Two further approaches to the signal processing problem are illustrated below. Both approaches are designed to eliminate, as far as possible, the effects of errors due to parasitic resistance (tracks, switches, etc.), component tolerance and the effects of temperature variation.

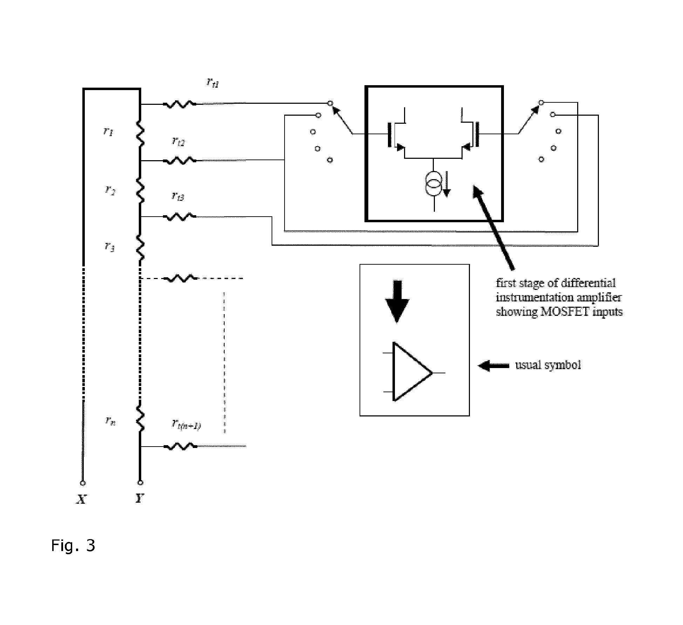

One approach is shown schematically in Fig. 3; a differential instrumentation (voltage) amplifier is multiplexed between pairs of resistor taps by the switching arrangement shown. A known reference voltage (DC or low frequency AC), $V_0$, is applied across the array (i.e. between terminals X and Y). An instrumentation amplifier (voltage amplifier- gain $A$) with very high input impedance is connected in turn between each element in the array. Since no current flows into the terminals of the amplifier, the parasitic resistances associated with the tracks and switches can be neglected. Let $r_{tot}$ be the total resistance of the array. The measured voltage across $r_1$ is:

$$V_i = A.V_o . \frac{r_i}{r_{tot}}$$

Hence, if the parameters $A$, $V_o$ and $r_{tot}$ are known, all the $r_i$ can be found. Of these parameters, $V_o$ can be specified accurately (bandgap source e.g.) and $A$ and $r_{tot}$ can be measured, e.g. periodically. $A$ and $r_{tot}$ will be temperature dependent, and in an embodiment a reference element as described above is employed.

Potential pitfalls arising from the very high impedance level in the circuit and the need for electronically programmable switches can be addressed as follows. Typically, MOSFET switches will be used and during the switching transitions excess charge is first stored and then removed resulting in transient currents flowing away from the device in both directions. Any currents flowing toward $r_i$ are relatively harmless, since the currents are small (typically in the order of pico-amps) and hence result in negligible voltage offsets. However, currents flowing towards the amplifiers have no resistive path to ground and hence charge up the gate-source capacitors of the input MOSFETs, resulting in damaging voltage offsets. For this reason, the symmetrical architecture shown in Fig. 3 is chosen, since the effects of the switching transients from pairs of switches will tend to be equal and opposite and hence cancel. The main residual effect will be a common mode (CM) offset voltage but an amplifier can be designed which is insensitive to that.

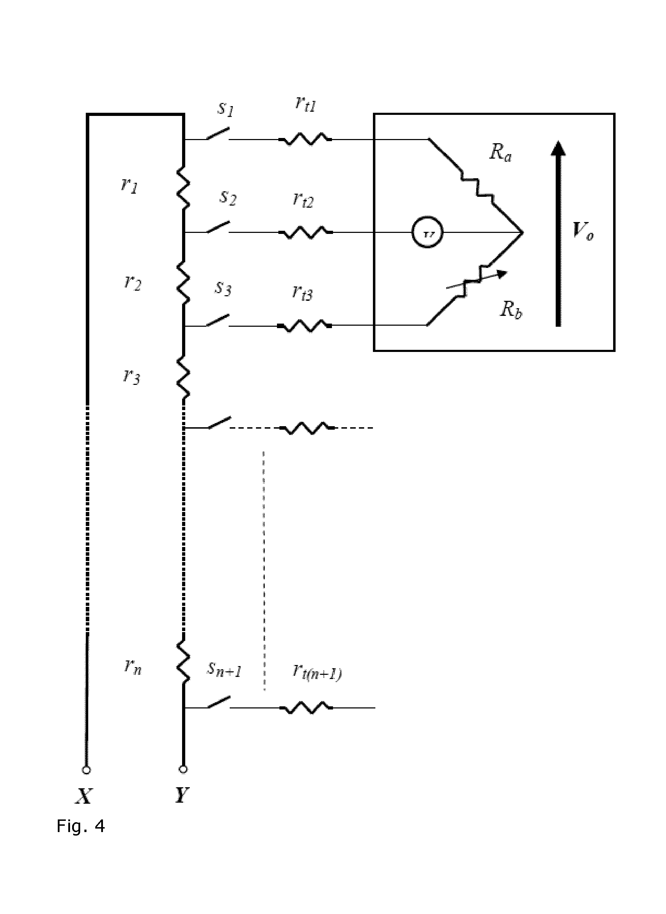

In the second approach, as illustrated in Fig. 4, the ratios between pairs of resistances are measured using the half-bridge configuration consisting of $R_a$, $R_b$ and V. The half-bridge structure is shifted along the array of resistive cells by the switches $s_i$. The bridge is nulled (i.e. $V_0 \rightarrow 0$) by adjusting $R_b$, which is electronically variable. This approach seeks to avoid the difficulties inherent in other approaches by operating at low impedance throughout. Thus, although electronic switches are used, the spurious effects of switching transients are minimised. The principle is illustrated in Fig. 4 and is based on forming a bridge circuit consisting of a pair of adjacent resistive cells, the other half of the bridge being the fixed resistor $R_a$ and the electronically variable component $R_b$. V is a voltage source which can be DC or a low frequency AC (e.g. from about 1 Hz to about 1000 Hz). Consider the case shown in Fig. 2, i.e. the terminals X and Y are open circuited and the switches $s_1$, $s_2$, ... $s_{n+1}$ are ON. The condition for the output to be nulled (i.e.. $V_0 \rightarrow 0$), is:

$$\frac{R_a}{R_b} = \frac{r_1 + r_{t1}}{r_2 + r_{t2}}$$

$$\cong \frac{r_1}{r_2}$$

for the case where $r_{t1} \ll r_1$, etc., i.e. the classical nulled bridge relationship.

Let:

$$\frac{r_1}{r_2} = \frac{R_{a1}}{R_{b1}} = a_1$$

$$\frac{r_2}{r_3} = \frac{R_{a2}}{R_{b2}} = a_2$$

$$.$$

$$.$$

$$.$$

$$\frac{r_{n-1}}{r_n} = \frac{R_{an}}{R_{bn}} = an$$

In addition, $r_{tot}$ is the sum of $r_i$ which can be rearranged:

$$r_{tot} = r_1 + r_1/a_1 + r_2/a_2 ... + r_n/a_n$$

$$= r_1 + r_1/a_1 + r_1/a_1 a_2 ... + r_n/\prod_{i=1}^{n-1} a_i$$

So for e.g. n = 3

$$r_{tot} = r_1\left(1 + 1/a_1 + 1/a_1 a_2\right)$$
$$= r_2\left(a_1 + 1_1 + 1/a_2\right)$$
$$= r_3\left(a_1 a_2 + a_2 + 1\right)$$

Inverting:

$$r_1 = r_{tot.} a_1 a_2 / D$$

$$r_2 = r_{tot.} a_2 / D$$

$$r_3 = r_{tot.} 1/D$$

Where $D = a_1 a_2 + a_2 + 1$.

Thus, given the complete set of ratios ($a_i$) and $r_{tot}$, all the resistor cell values can be easily found.

This approach provides the following advantages:

All the required measurements (except) one are ratios and are therefore temperature independent; since the switches are terminated in a low resistance at both ends errors due to switching transients are unlikely to be a problem; only one resistance measurement needs to be made ($r_{tot}$) to determine all the cell resistance values. The method may advantageously further employ a reference element for temperature calibration.

Another aspect of the invention relates to the use of the sensor system of the invention, e.g. the sensor system may be used with a surface, which is subject to friction due to contact with solids, liquids or gases. For example, the sensor system may be used in injection moulding, e.g. in the flange or mould of an injection mould, in the automotive industry, e.g. for driveshafts, gears, brake pads, in the wind mill industry, e.g. for planetary gearboxes. In a preferred embodiment the sensor system is used in the temperature range of about 5°C to about 500°C, about 100°C to about 500°C, such as about 200°C to about 400°C, or about 300°C to about 400°C. However, in other embodiments the sensor system may be used at higher or lower temperatures.

**Examples**

**Example 1 - Laser micromachining of a recess in a substrate material**

Femtosecond laser ablation is preferred for creating micrometer size grooves formation for the measuring mesh in stainless steel and other metals used in mould constructions. Lasers offer great freedom for flexibility, degree of automation, they may work without any consumable materials and in a non-contact way. Femtosecond laser ablation, because of the reduced heat-affected zone, where melting and solidification can occur, allows the micromachining and surface patterning of materials with minimal mechanical and thermal deformation and with micrometer precision. Optimal parameters of the laser for micrometer size grooves formation are: pulse duration <1 ps; fluence in the focused beam in the range 1-20 J/cm$^2$; pulse repetition rate <700 kHz; polarisation - perpendicular; focused beam size in the range 10-30 $\mu$m depending on the hatching scheme. For the formation of the micrometer size grooves the other very important parameters are the cutting velocity, the number of cutting repetitions, and the focusing technique. When making more rapid workpiece movements, the kerf walls become much smoother than when applying only few slow processing steps. These parameters were used in building of the experimental set-up for grooves formation with high repetition rate femtosecond pulses.

Exemplary laser parameters are summarised below

| | |
|---|---|
| Motion speed of the beam | 1000 mm/s |
| Focusing lens | 100 mm |
| Focus plane position | -200 $\mu$m |
| Amount of circles in a spiral (groove 200x200 $\mu$m x 10 mm | 19 |
| Distance between each circle (d) | 5 $\mu$m |
| Total repetitions of algorithm | 120 |

Laser irradiation conditions

| | |
|---|---|
| Average power | 5W |
| Repetition rate | 50 kHz |
| Pulse energy | 100 $\mu$J |
| Temporal beam intensity profile | Gaussian |
| Pulse duration | 300 fs |

(continued)

| Spatial beam intensity profile | Gaussian |
|---|---|
| Beam diameter ($1/e^2$) | ~ 30 $\mu$m |

The results have turned out to be very precise grooves. Specified dimensions for heights and widths of grooves in steels can be machined within tolerances of about 5%.

Characterisation of groove

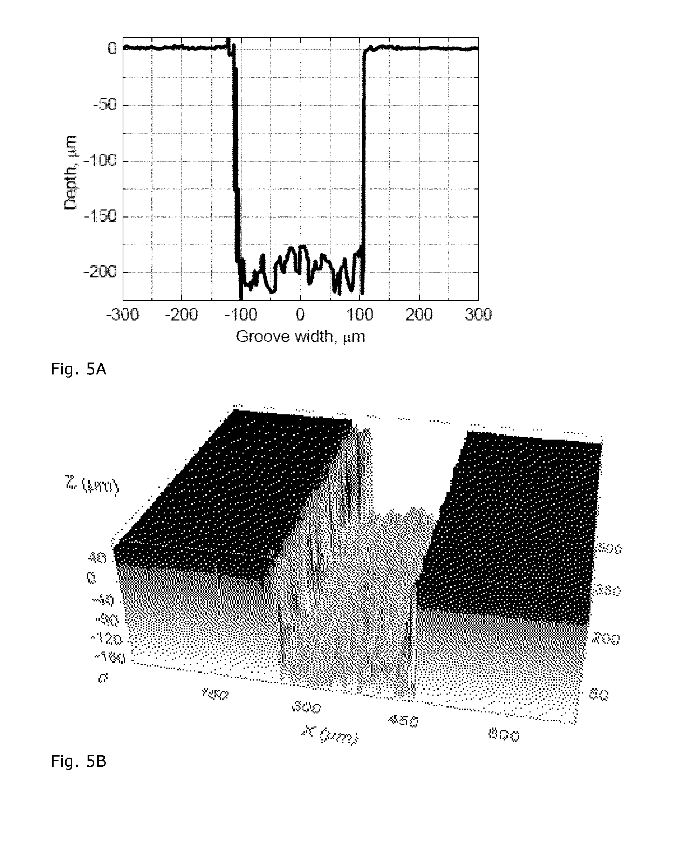

All grooves were cleaned in the ultrasonic bath by using distilled water prior to the optical characterisation of the groove morphology. This step was necessary to remove the porous recast material attached to the surface in form of nano/micro particles that remain after the processing. Further all grooves were characterised by using optical microscope Olympos BX51 and optical profilometer Sensofar PL$\mu$230. The obtained results are illustrated in Fig. 5A and Fig. 5B.

**Example 2 - Measurement of electrical properties of ceramic materials**

Regarding the conductive ceramics, the focus has been on Magnéli Phases ($Ti_nO_{2n-1}$) and MAX Phases. Magnéli Phases obtained from reduction of Titanium Dioxide appears to have electrical properties, particularly the resistivity ($\rho = 10^9 \mu\Omega$. cm at room temperature) of interest to the Mesmesh project. To ensure an even greater difference between the active component (conductor) and the insulator, it has been pointed out that it would be possible to reduce the Magnéli Phases to a further extent and reduce their resistivity by another 2-3 orders of magnitude.

In order to prepare exemplary Magnéli phase material a $TiO_2$ powder (3$\mu$m, Pikem, 99.5%) was processed by adding 3wt.% of Polyethylene Glycol (PEG) 8000MW to distilled water to create a slurry which was ball-milled for 24h. The slurry was dried and the resulting powder sieved through a 45$\mu$m mesh. Pellets were formed by uniaxial pressing at 200MPa. The green bodies were then fired at 1300°C (4h) and reduction of $TiO_2$ was achieved by carbothermal reduction at 1300°C (6h). Typical sample dimensions were 10.6mm diameter ($\Phi$), and 1.4mm thickness (t). For electrical measurements samples were polished to a mirror finish and electroded with Au using an Edward E306 Evaporator. The AC conductivity and permittivity were measured from 25-375°C using a Solartron 1260 Impedance Analyser with a Solartron 1296 dielectric interface. The range of frequency investigated was from 0.1Hz to 1MHz, and the applied voltage was 0.1Vrms. Microstructural characterisation was undertaken by using optical microscopy and a Scanning Electron Microscope (SEM) and X-ray diffraction (XRD). The density of the tablets was obtained using the hydrostatic method (BS Standard No. EN 623-2:1993).

The microstructure of a typical $Ti_nO_{2n-1}$ specimen thermally etched in argon revealed a dense structure, calculated to be 95 to 95.5% of theoretical density (4.3 g/cm$^3$). The presence of large grains, over 30$\mu$m, was clearly observed, suggesting that a degree of grain growth has occurred during the reduction treatment of $Ti_nO_2$. For comparison, the grain size of non-reduced $Ti_nO_2$ was typically in the order of 10$\mu$m (not shown). The residual porosity (5%) measured was similar to the low porosity observed in a SEM image.

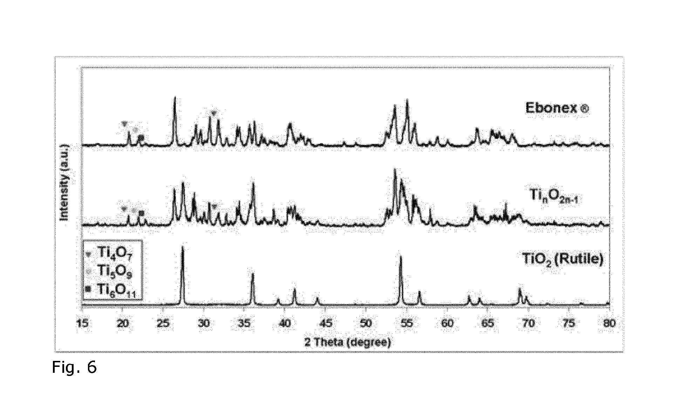

An XRD spectrum (Fig. 6) of the $Ti_nO_{2n-1}$ specimens revealed the presence of several Magnéli phases, which can be identified by their characteristic peaks and the main phases present are $Ti_4O_7$ (20.7° and 31.7°), $Ti_5O_9$ (21.95°), $Ti_6O_{11}$ (22.85°), which are the most electrically conductive of the series.

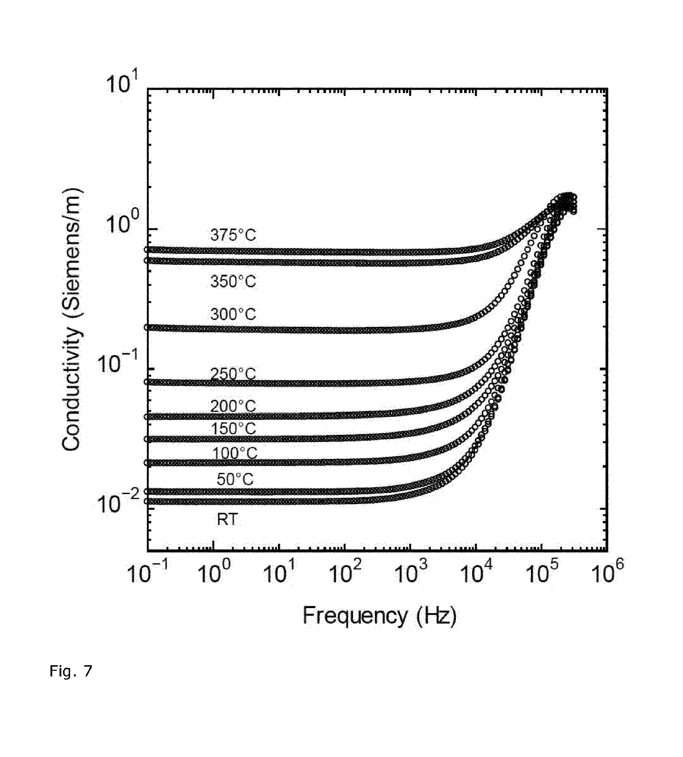

The real AC conductivity, $\sigma$ (w), of $Ti_nO_{2n-1}$ was observed to vary with frequency, as shown in Fig. 7. There is no frequency dependence of the conductivity at low (0.1Hz) and medium (1kHz) frequencies, whereas for higher (1-10kHz) frequencies the conductivity begins to rise with frequency and the same trend is observable over the all range of temperatures investigated.

**Example 3 - Measurement of thermal expansion coefficients of ceramic materials**

Bars of 25 mm long Magnéli phase ($Ti_nO_{2n-1}$) ceramic have been obtained by carbothermal reduction of $TiO_2$ bars performed at 1300°C either in argon or air. As for the case of $TiO_2$, dilatometry measurements have been repeated three times, from 25 to 1000°C, applying a heating rate of 120°C, under a nitrogen flow and values are reported in the table. Having a controlled atmosphere in this case is particularly important to prevent the re-oxidation of the sub-stochiometric Magnéli phase.

| Ti$_n$O$_{2n-1}$ (Magneli Phase) | Thermal Expansion Coefficient ($\alpha$) [x10$^{-6}$/K$^{-1}$] | | |
| --- | --- | --- | --- |
| | Full range 26 - 1000°C | Sensor operation 100 - 400°C | Fabrication 400-600°C |
| 1$^{st}$ measurement | 934 | 9.31 | 9.03 |
| 2$^{nd}$ measurement | 9.38 | 937 | 9.10 |
| 3$^{rd}$ measurement | 9.29 | 925 | 9.33 |
| | **9.34±0.05** | **9.31±0.06** | **9.15±0.16** |

For comparison, the thermal expansion coefficient for steel is within the range of 11.0-13.0 x 10$^{-6}$/K$^{-1}$.

**Example 4 - Microstructural characterisation of ceramic materials**

The ceramic materials have been polished in order to analyse their microstructure. Grains and grain boundaries characterising the ceramic microstructure can be revealed by thermally etching the TiO$_2$ and Magnéli Phases specimens in Argon. Optical microscopy images of Ti$_n$O$_{2n-1}$, revealed the presence of rather large grains and residual porosity within the grains. It can be appreciated that considerable grain size growth has occurred during the carbothermal reduction of titanium dioxide, because the grain sizes of titanium dioxide were considerably smaller. Scanning Electron Microscope (SEM) images of the microstructure of the thermally etched Ti$_n$O$_{2n-1}$, processed respectively with 6 and 3% wt. of organic binder revealed that in both cases the ceramic structure has been slightly damaged during the polishing step and there was also a presence of some contamination due to the polishing media. Nevertheless, the residual porosity of the ceramics, which appear to be rather dense, can be better appreciated.

**Claims**

1. A sensor system for monitoring wear on a surface comprising:

   a substrate of a base material, the substrate having a surface with a recess;
   a sensor comprising an electrically conductive ceramic material selected from a Magnéli phase ceramic material, a MAX phase ceramic material or a combination thereof, the sensor having a wear surface and a first electrical contact area in communication with a first electrical conductor and a second electrical contact area in communication with a second electrical conductor,
   the sensor being embedded in an electrically insulating material so that the wear surface is exposed to allow contact with the wear surface and the first and the second electrical conductors being in communication with a signal interpretation circuit, and
   the electrically insulating material being embedded in the recess to electrically insulate the sensor from the substrate.

2. The sensor system according claim 1, wherein the sensor comprises a plurality of electrical contact areas each in communication with an electrical conductor in communication with the signal interpretation circuit.

3. The sensor system according to claim 1 or 2, wherein the sensor system comprises a plurality of sensors as defined in any one of claims 1 or 2.

4. The sensor system according to any one of claims 1 to 3, wherein the Magnéli phase ceramic material comprises an oxide of a metal selected from Ti, V, Cr, Nb, Mo, Ce, Pr, and Tb.

5. The sensor system according to any one of claims 1 to 3, wherein the MAX phase ceramic material is of the general formula M$_{n+1}$AX$_n$, where n = 1 to 3 and M is selected from Ti, Sc, Zr, Hf, V, Mb, Ta, Cr, and Mo, and A is selected from Al, Cd, Ga, In, Tl, Si, Ge, Sn, Pb, P, As, and S, and X is C or N.

6. The sensor system according to any one of claims 1 to 5, wherein the sensor system further comprises a reference element of the electrically conductive ceramic material, the reference element having a first electrical contact area in communication with a first electrical conductor and a second electrical contact area in communication with a second electrical conductor each electrical conductor being in communication with the signal interpretation circuit, the reference element being embedded in the electrically insulating material to prevent contact with the reference element, and

the electrically insulating material being embedded in a recess in the substrate material to electrically insulate the sensor from the substrate.

7. The sensor system according to any one of claims 1 to 6, wherein the substrate comprises an engagement means for engagement with a complementary engagement means.

8. The sensor system according to any one of claims 1 to 7, wherein the recess has a largest cross-sectional dimension of about 10 to about 1000 $\mu$m.

9. The sensor system according to any one of claims 1 to 8, wherein the recess has a length of about 1 to about 20 mm.

10. The sensor system according to any one of claims 1 to 9, wherein the base material, the electrically conductive ceramic material and the electrically insulating material have comparable wear characteristics.

11. A method of recording a map of wear on a surface, the method comprising the steps of:

   providing a sensor system according to any one of claims 1 to 10,
   applying a current through the sensor, measuring the electrical potential difference in the sensor and calculating the total resistance of the sensor;
   calculating a wear depth of the sensor from the resistance of the sensor;
   creating a map of wear on the surface from the calculated wear depth of the sensor by correlating the calculated wear depth with the location on the surface of the sensor.

12. The method according to claim 11, wherein the method comprises the steps of:

   providing a sensor system according to any one of claims 2 to 10,
   applying a current through the sensor, measuring the electrical potential difference in the sensor and calculating the total resistance of the sensor;
   measuring the electrical potential difference of a resistive cell defined between a first electrical contact area and a second electrical contact area;
   estimating the resistance of the resistive cell;
   calculating a wear depth of the resistive cell from the estimated resistance of the resistive cell;
   creating a map of wear on the surface from the calculated wear depth of the resistive cell by correlating the calculated wear depth with the location on the surface of the resistive cell.

13. The method according to any one of claims 11 to 12, wherein the sensor system comprises a reference element as defined in claim 6, and the method further comprises the step of temperature calibrating the estimated resistance.

14. The method according to any one of claims 11 to 13, wherein the recorded map of wear is a 3D-map.

15. Use of a sensor system according to any one of claims 1 to 10 in the temperature range of about 100°C to about 500°C.

Fig. 1A

Fig. 1B

Fig. 2

first stage of differential
instrumentation amplifier
showing MOSFET inputs

usual symbol

Fig. 3

EP 2 637 014 A1

Fig. 4

20

Fig. 5A

Fig. 5B

Fig. 6

Fig. 7

Europäisches
Patentamt

European
Patent Office

Office européen
des brevets

# EUROPEAN SEARCH REPORT

Application Number

EP 12 15 8893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2010/135011 A1 (SIEMENS ENERGY INC [US]; SHINDE SACHIN R [US]; KULKARNI ANAND A [US];) 25 November 2010 (2010-11-25) <br> * abstract * <br> * page 3, line 1 - line 9 * <br> * page 5, line 1 - line 26 * <br> ----- | 1-15 | INV. <br> G01N3/56 |
| Y | WO 2009/038532 A1 (SECO TOOLS AB [SE]; SANDVIK INTELLECTUAL PROPERTY [SE]; PALMQVIST JENS) 26 March 2009 (2009-03-26) <br> * page 1, paragraph 1 * <br> * page 5, paragraph 1 - page 7, paragraph 1 * <br> ----- | 1-15 | |
| Y,D | US 2004/202886 A1 (SUBRAMANIAN RAMESH [US]) 14 October 2004 (2004-10-14) <br> * figures 1-2 * <br> * paragraphs [0018] - [0019] * <br> ----- | 1-15 | |
| A | WO 2011/087615 A2 (SIEMENS ENERGY INC [US]; MITCHELL DAVID J [US]; KULKARNI ANAND A [US]) 21 July 2011 (2011-07-21) <br> * figure 14 * <br> * page 7, paragraph 4 - page 10, paragraph 3 * <br> ----- | 1-15 | TECHNICAL FIELDS SEARCHED (IPC) <br><br> G01N <br> F01D |

The present search report has been drawn up for all claims

| Place of search | Date of completion of the search | Examiner |
|---|---|---|
| The Hague | 13 August 2012 | Bockstahl, Frédéric |

EPO FORM 1503 03.82 (P04C01)

# EP 2 637 014 A1

## ANNEX TO THE EUROPEAN SEARCH REPORT
## ON EUROPEAN PATENT APPLICATION NO.

EP 12 15 8893

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2012

| Patent document cited in search report | | Publication date | Patent family member(s) | | Publication date |
|---|---|---|---|---|---|
| WO 2010135011 | A1 | 25-11-2010 | EP | 2433111 A1 | 28-03-2012 |
| | | | US | 2009219040 A1 | 03-09-2009 |
| | | | WO | 2010135011 A1 | 25-11-2010 |
| WO 2009038532 | A1 | 26-03-2009 | EP | 2201154 A1 | 30-06-2010 |
| | | | SE | 0702054 A | 18-03-2009 |
| | | | US | 2010322840 A1 | 23-12-2010 |
| | | | WO | 2009038532 A1 | 26-03-2009 |
| US 2004202886 | A1 | 14-10-2004 | NONE | | |
| WO 2011087615 | A2 | 21-07-2011 | US | 2011169651 A1 | 14-07-2011 |
| | | | WO | 2011087615 A2 | 21-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010030308 A
- US 2003017018 A
- US 2004202886 A
- WO 2010135011 A